# EUROPÄISCHE PATENTANMELDUNG

(11) **EP 1 241 035 A2**
(43) Veröffentlichungstag der Anmeldung: **18.09.2002**
(21) Anmeldenummer: 02000650.8
(22) Anmeldetag: 11.01.2002
(51) Int. Cl.: B60J 7/14

(54) **Abdeckeinrichtung für Mulden**

(30) Priorität: 16.03.2001 DE 20104763 U
(71) Anmelder: Bodden Fahrzeugbau GmbH, 47533 Kleve (DE)
(72) Erfinder: Witt, Erhard, 47533 Kleve (DE)
(74) Vertreter: DR. STARK & PARTNER

(57) **Zusammenfassung**

Die Erfindung betrifft eine Abdeckeinrichtung (1) für Mulden (3), insbesondere für auf einem Lastkraftwagen oder Fahrzeuganhänger befindliche Mulden (3), mit einem Muldenboden und mit umlaufenden, einen Muldenraum mit oberseitiger Muldenöffnung umschließenden Muldenwänden (4,5,6,7), wobei die Position der Abdeckeinrichtung (1) zwischen einer die Muldenöffnung verschließenden Transportposition und einer die Muldenöffnung zumindest teilweise freilassenden Ladeposition veränderbar ist. Um eine Abdeckeinrichtung (1) für Mulden (3) anzugeben, mit der eine sichere und einfache sowie leicht zu handhabende Abdeckung der Mulden möglich ist, soll die Abdeckeinrichtung zumindest ein parallel zur Längsachse der Mulde (3) faltbares und in gefalteter Ladeposition in etwa auf einer Längswand (4,5) der Mulde (3) aufliegendes, durch eine insbesondere von einem Antrieb betätigbare Haltemechanik in seiner Position veränderbares Abdeckmittel aufweisen.

## Beschreibung

Die Erfindung betrifft eine Abdeckeinrichtung für Mulden, insbesondere für auf einem Lastkraftwagen oder Fahrzeuganhänger befindliche Mulden, mit einem Muldenboden und mit umlaufenden, einen Muldenraum mit oberseitiger Muldenöffnung umschließenden Muldenwänden, wobei die Position der Abdeckeinrichtung zwischen einer die Muldenöffnung verschließenden Transportposition und einer die Muldenöffnung zumindest teilweise freilassenden Ladeposition veränderbar ist.

Aus der Praxis sind derartige Abdeckeinrichtungen für Mulden bekannt, die entweder bei Auslieferung der Mulde direkt fest auf dieser montiert sind oder aber auch zu einem späteren Zeitpunkt auf einer bis dahin offenen Mulde nachgerüstet werden können.

Hierbei sind verschiedene bisherige Systeme bekannt, die allesamt Nachteile aufweisen. So sind z. B. Abdeckeinrichtungen bekannt, bei denen eine in ihrer Breite auf die Muldenlänge abgestimmte Plane von der einen Längsseite über die Stirnseiten bis zur nächsten Längsseite herübergerollt wird. Nachteilig hierbei ist, dass dies zum einen manuell erfolgt und auf der einen Seite der Mulde die Planenrolle angeordnet ist und auf der anderen Seite der Mulde das freie Ende über den Muldenrand lose herunterhängt.

Auch sind Versionen bekannt, bei denen eine lange und schmale Plane in Längsrichtung über die Muldenöffnung gezogen wird. Auch hierbei ist eine fehlende Automatisierbarkeit von Nachteil und in geöffnetem Zustand ist die an einem Ende der Mulde befindliche Plane insoweit hinderlich, als sie entweder die Muldenöffnung verringert oder aber über die Mulde hinaussteht und insofern im geöffneten Zustand kein oder nur ein einfeschränkter Fahrbetrieb möglich ist.

Weiterhin sind auch Abdeckeinrichtungen in der Praxis bekannt, bei denen an zwei Seiten je eine dort angeschlagene Klappe jeweils hälftig die Muldenöffnung abdeckt und mittels Antrieb hochgeklappt werden kann. Damit diese Klappen beim Beladen nicht im Weg sind, ist ein seitliches Herablassen entlang der Muldenwand zumindest teilweise möglich. Nachteilig hierbei ist, dass auch bei dieser Version entweder die Muldenbreite durch die seitlich befindliche Abdeckeinrichtung verbreitert wird oder aber bei bestehenden Höchstmaßen der Muldenraum insofern kleiner ausfallen muss. Auch ist durch die mittige Berührfläche der beiden Abdeckeinrichtungen eine Undichtigkeitsquelle gegeben, durch die z. B. Feuchtigkeit eintreten und das in der Mulde befindliche Gut beeinträchtigen kann.

Aufgabe der Erfindung ist es, die vorgenannten Nachteile zu vermeiden und eine Abdeckeinrichtung für Mulden anzugeben, mit der eine sichere und einfache sowie leicht zu handhabende Abdeckung der Mulden möglich ist.

Diese Aufgabe wird gelöst durch eine Abdeckeinrichtung für Mulden, insbesondere für auf einem Lastkraftwagen oder Fahrzeuganhänger befindliche Mulden, mit einem Muldenboden und mit umlaufenden, einen Muldenraum mit oberseitiger Muldenöffnung umschließenden Muldenwänden, wobei die Position der Abdeckeinrichtung zwischen einer die Muldenöffnung verschließenden Transportposition und einer die Muldenöffnung zumindest teilweise freilassenden Ladeposition veränderbar ist, wobei die Abdeckeinrichtung zumindest ein parallel zur Längsachse der Mulde faltbares und in gefalteter Ladeposition in etwa auf einer Längswand der Mulde aufliegendes, durch eine insbesondere von einem Antrieb betätigbare Haltemechanik in seiner Position veränderbares Abdeckmittel aufweist. Hierdurch wird eine gleichbleibende Breite der Mulde unabhängig von geöffneter oder geschlossener Position der Abdeckeinrichtung gewährleistet, da das Abdeckmittel auf der Längswand aufliegt und nicht über diese hinausragt. Aus diesem Grunde ist auch die zur Verfügung stehende Muldenöffnung unverändert und nicht eingeschränkt.

Dabei kann wenigstens ein Abdeckmittel eine Plane oder eine textile Bahn aufweisen, so dass ein flexibles und kostengünstiges Abdeckmittel gegeben ist, das weiterhin ein geringes Gewicht aufweist.

Erfindungsgemäß kann die Haltemechanik mehrere an den Stirnseiten der Mulde verschwenkbar angeordnete Haltearme, die an ihrem jeweiligen freien Ende durch ein insbesondere als Querstrebe ausgebildetes Querverbindungselement mit dem entsprechenden an der anderen Stirnseite gegenüberliegenden Haltearm verbunden sind, beinhalten, so dass eine gute Führung und Abstützung des Abdeckmittels gegeben ist.

Vorteilhafterweise kann an beiden Stirnseiten jeweils ein separater Antrieb vorgesehen sein, so dass aufwendige Übertragungseinrichtungen vermieden werden und keine starke Belastung der Querverbindungselemente erfolgt.

Bei einem bevorzugten Ausführungsbeispiel der Erfindung kann zumindest ein Antrieb an einem Haltearm angreifen und die anderen nichtangetriebenen Haltearme können mittels die Haltearme verbindender Übertragungselemente direkt oder über einen oder mehrere Haltearme mit dem Antrieb verbunden sein, so dass ein gezielter und gut steuerbarer Bewegungsablauf erfolgt und eine gleichmäßige Lastverteilung gegeben ist.

Erfindungsgemäß kann die Länge der Haltearme in etwa dem jeweiligen Abstand des Befestigungspunktes des entsprechenden Haltearms an der Stirnwand von der als Lager für das geöffnete Abdeckmittel dienenden Längswand entsprechen, so dass die freien Enden der Haltearme und die Querverbindungselemente bei geöffneter Ladeposition der Abdeckeinrichtung platzsparend genau übereinanderliegend angeordnet sind.

Weiterhin kann zumindest ein Antrieb einen Pneumatikzylinder beinhalten, so dass ein einfacher und unkomplizierter Antrieb der Abdeckeinrichtung erfolgen kann. Hierbei kann sogar unter Umständen auf das üblicherweise am Lastkraftwagen vorhandene Druckluftsystem zurückgegriffen werden, so dass auf motorische Antriebe oder dergleichen verzichtet werden kann.

Es können selbstverständlich aber auch andere Antriebsformen, wie z. B. Hydraulikzylinder, Elektromotoren etc. Verwendung finden.

Auch kann ein insbesondere durch einen Pneumatikzylinder betätigbares Verriegelungselement vorgesehen sein, so dass ein unbeabsichtigtes Öffnen, insbesondere während der Fahrt oder bei ungünstigen Windverhältnissen, sicher vermieden wird.

Dabei kann wenigstens ein Verriegelungselement in dem an die nicht als Lager für das geöffnete Abdeckmittel dienende Längswand angrenzenden Bereich der Stirnwand vorgesehen sein, so dass ein sicherer Verschluss der Abdeckeinrichtung gewährleistet ist. Hierbei kann durch das Verriegelungselement das Abdeckmittel zur besseren Abdichtung auch fest auf die Längswand heruntergezogen werden oder aber zumindest in einer solchen Position gehalten werden.

Vorzugsweise kann wenigstens ein Verriegelungselement eine Sperrklinke beinhalten.

Im Folgenden wird ein in der Zeichnung dargestelltes Ausführungsbeispiel der Erfindung erläutert. Es zeigen:
- Fig. 1: eine frontseitige Ansicht einer an einer auf einem Fahrzeuganhänger befindlichen Mulde angeordneten erfindungsgemäßen Abdeckeinrichtung,
- Fig. 2: einen Teilbereich des Gegenstands nach Fig. 1 in einer vergrößerten Darstellung und
- Fig. 3: eine Detailansicht "X" des Gegenstands nach Fig. 1.

In allen Figuren werden für gleiche bzw. gleichartige Bauteile übereinstimmende Bezugszeichen verwendet.

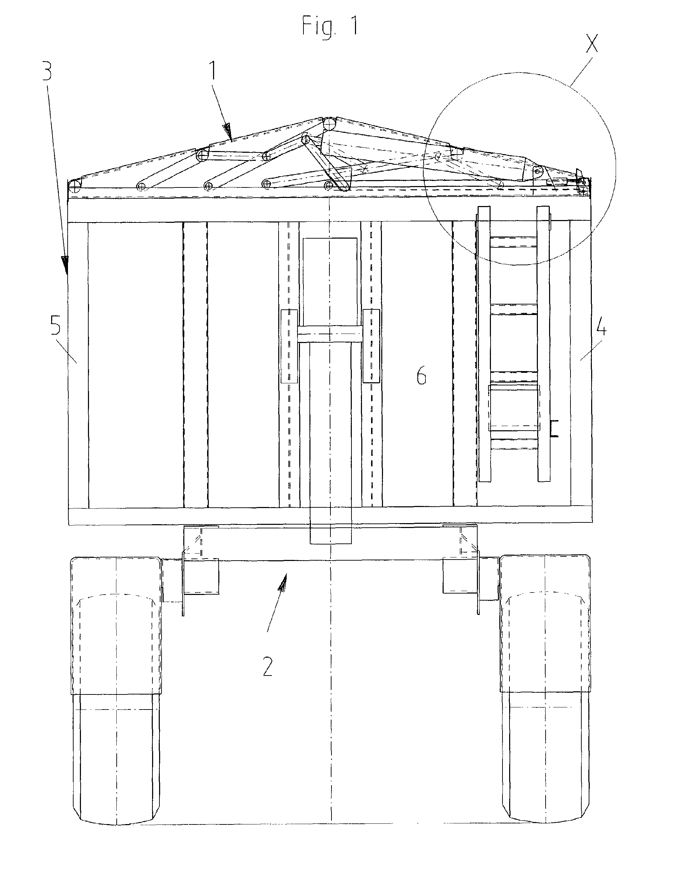

Fig. 1 zeigt eine Abdeckeinrichtung 1, die oberseitig an einer auf einem Fahrzeuganhänger 2 befindlichen Mulde 3 angeordnet ist.

Die Mulde 3 besteht dabei aus seitlich verlaufenden Längswänden 4, 5 sowie einer frontseitigen Stirnwand 6 und einer in der Zeichnung nicht sichtbaren Stirnwand 7.

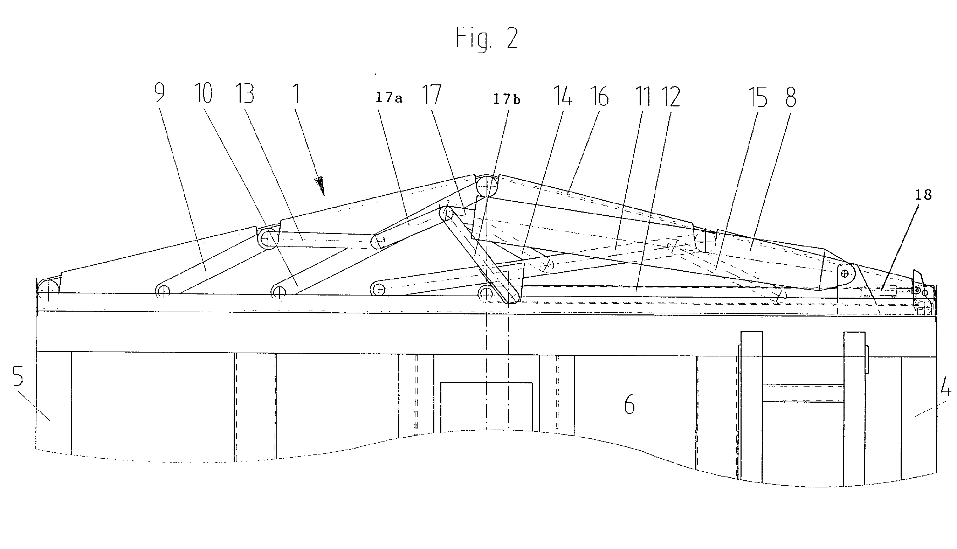

Wie aus Fig. 2 ersichtlich, besteht die Abdeckeinrichtung 1 aus einem einen Pneumatikzylinder 8 aufweisenden Antrieb und einer aus Haltearmen 9, 10, 11, 12 und Übertragungselementen 13, 14, 15 bestehenden Haltemechanik sowie einem als Plane 16 ausgebildetem Abdeckmittel. Die Haltearme 9, 10, 11, 12 sind dabei jeweils sowohl an der frontseitigen Stirnseite 6 als auch an der heckseitigen Stirnseite 7 angeordnet und ihre freien Enden sind durch Querstreben 9a, 10a, 11a, 12a mit den entsprechenden freien Enden der an der anderen Stirnseite 6, 7 gegenüberliegenden Haltearme 9, 10, 11, 12 verbunden.

Dabei sind die Haltearme 9, 10, 11, 12 so an den Stirnwänden 6, 7 angeschlagen, dass der Abstand zur Längswand 5 genau der Länge des jeweiligen Haltearms 9, 10, 11, 12 entspricht. Dabei ist der Haltearm 11 genau mittig an den Stirnwänden 6 bzw. 7 angeschlagen und seine Länge entspricht der Hälfte der Breite der jeweiligen Stirnwand 6 bzw. 7.

Der ebenfalls an den Stirnwänden 6 bzw. 7 angeschlagene Pneumatikzylinder 8 greift mit einer ausfahrbaren Kolbenstange 17 über Übertragungselemente 17a, 17b an dem Haltearm 10 an und lenkt diesen zum Öffnen oder Schließen der Abdeckeinrichtung 1 aus. Über die Übertragungselemente 13, 14, 15 werden dabei die nichtangetriebenen Haltearme 9, 11, 12 mitbewegt.

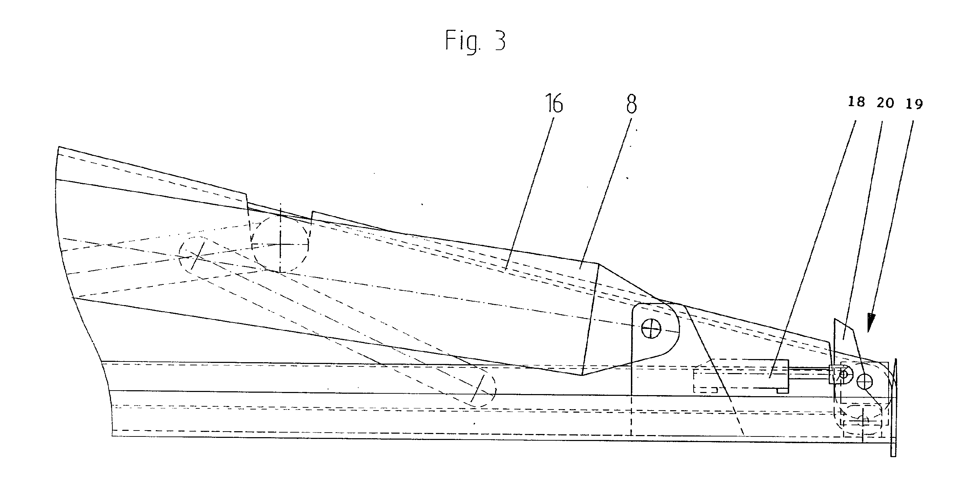

Fig. 3 zeigt ein durch einen Pneumatikzylinder 18 betätigbares Verriegelungselement 19, das eine auslenkbare Sperrklinke 20 beinhaltet, die an dem freien Ende des Haltearms 12 bzw. der Querstrebe 12a an.

## Patentansprüche

1. Abdeckeinrichtung (1) für Mulden (3), insbesondere für auf einem Lastkraftwagen oder Fahrzeuganhänger (2) befindliche Mulden (3), mit einem Muldenboden und mit umlaufenden, einen Muldenraum mit oberseitiger Muldenöffnung umschließenden Muldenwänden (4, 5, 6, 7), wobei die Position der Abdeckeinrichtung (1) zwischen einer die Muldenöffnung verschließenden Transportposition und einer die Muldenöffnung zumindest teilweise freilassenden Ladeposition veränderbar ist, **dadurch gekennzeichnet, dass** die Abdeckeinrichtung (1) zumindest ein parallel zur Längsachse der Mulde (3) faltbares und in gefalteter Ladeposition in etwa auf einer Längswand (4, 5) der Mulde (3) aufliegendes, durch eine insbesondere von einem Antrieb betätigbare Haltemechanik in seiner Position veränderbares Abdeckmittel aufweist.

2. Abdeckeinrichtung (1) nach Anspruch 1, **dadurch gekennzeichnet, dass** wenigstens ein Abdeckmittel eine Plane (16) oder eine textile Bahn aufweist.

3. Abdeckeinrichtung (1) nach Anspruch 1 oder 2, **dadurch gekennzeichnet, dass** die Haltemechanik mehrere an den Stirnseiten (6, 7) der Mulde (3) verschwenkbar angeordnete Haltearme (9, 10, 11, 12), die an ihrem jeweiligen freien Ende durch ein insbesondere als Querstrebe (9a, 10a, 11a, 12a) ausgebildetes Querverbindungselement mit dem entsprechenden an der anderen Stirnseite (6, 7) gegenüberliegenden Haltearm (9, 10, 11, 12) verbunden sind, beinhaltet.

4. Abdeckeinrichtung (1) nach Anspruch 3, **dadurch gekennzeichnet, dass** an beiden Stirnseiten (6, 7) jeweils ein separater Antrieb vorgesehen ist.

5. Abdeckeinrichtung (1) nach Anspruch 3 oder 4, **dadurch gekennzeichnet, dass** zumindest ein Antrieb an einem Haltearm (9, 10, 11, 12) angreift und die anderen nichtangetriebenen Haltearme (9, 10, 11, 12) mittels die Haltearme (9, 10, 11, 12) verbindender Übertragungselemente (13, 14, 15) direkt oder über einen oder mehrere Haltearme (9, 10, 11, 12) mit dem Antrieb verbunden sind.

6. Abdeckeinrichtung (1) nach einem der Ansprüche 3 bis 5, **dadurch gekennzeichnet, dass** die Länge der Haltearme (9, 10, 11, 12) in etwa dem jeweiligen Abstand des Befestigungspunktes des entsprechenden Haltearms (9, 10, 11, 12) an der Stirnwand (6, 7) von der als Lager für das geöffnete Abdeckmittel dienenden Längswand (4, 5) entspricht.

7. Abdeckeinrichtung (1) nach einem der Ansprüche 1 bis 6, **dadurch gekennzeichnet, dass** zumindest ein Antrieb einen Pneumatikzylinder (8) beinhaltet.

8. Abdeckeinrichtung (1) nach einem der Ansprüche 1 bis 7, **dadurch gekennzeichnet, dass** ein insbesondere durch einen Pneumatikzylinder (18) betätigbares Verriegelungselement (19) vorgesehen ist.

9. Abdeckeinrichtung (1) nach Anspruch 8, **dadurch gekennzeichnet, dass** wenigstens ein Verriegelungselement (19) in dem an die nicht als Lager für das geöffnete Abdeckmittel dienende Längswand (4, 5) angrenzenden Bereich der Stirnwand (6, 7) vorgesehen ist.

10. Abdeckeinrichtung (1) nach Anspruch 8 oder 9, **dadurch gekennzeichnet, dass** wenigstens ein Verriegelungselement (19) eine Sperrklinke (20) beinhaltet.
